# EUROPÄISCHE PATENTSCHRIFT

(11) **EP 3 259 413 B1**
(45) Veröffentlichungstag und Bekanntmachung des Hinweises auf die Patenterteilung: **23.10.2019**
(21) Anmeldenummer: 16747771.0
(22) Anmeldetag: 03.08.2016
(51) Int. Cl.: E03C 1/10, C02F 1/32, E03B 11/06

(54) **SYSTEMTRENNANLAGE FÜR FLÜSSIGKEITEN DURCH KEIMFREIE HYGIENEZONE**
SYSTEM SEPARATING INSTALLATION FOR LIQUIDS UTILIZING A MICROBE-FREE HYGIENE ZONE
INSTALLATION SÉPARATRICE DE SYSTÈMES DESTINÉE À DES LIQUIDES METTANT EN OEUVRE UNE ZONE HYGIÉNIQUE EXEMPTE DE GERMES

(30) Priorität: 04.08.2015 DE 102015112791
(43) Veröffentlichungstag der Anmeldung: 27.12.2017
(73) Patentinhaber: Völk, Reinhard, 86860 Jengen (DE)
(72) Erfinder: GÖTZFRIED, Ute, 86862 Lamerdingen (DE)
(74) Vertreter: Lohr, Jöstingmeier & Partner
(86) Internationale Anmeldenummer: PCT/EP2016/068516
(87) Internationale Veröffentlichungsnummer: WO 2017/021437

(56) Entgegenhaltungen:
- DE-A1- 3 247 320
- DE-A1- 19 618 888
- DE-A1- 19 716 989
- JP-A- S 618 189

## Beschreibung

### Technisches Gebiet

Die Erfindung betrifft eine Systemtrennanlage nach dem Oberbegriff des Patentanspruchs 1.

### Stand der Technik

Moderne Trinkwasserversorgungen haben eine oder mehrere zentrale Wasseraufbereitungsanlage, von denen u.a. mikrobiologisch unbedenkliches Trinkwasser in ein Versorgungsnetz eingespeist wird. Jedoch besteht das Risiko, dass über die Auslässe des Trinkwassernetzes Keime in das Trinkwassernetz eingeschleust werden könnten, z.B. wenn Auslässe in keimgefährdeten Bereichen angeordnet sind (Viehtränken, Schlachthäuser, Krankenhäuser, Nachfüllauslässe von Brauchwasserzisternen). Durch Druckschwankungen besteht die Gefahr eines 'Einsaugens' von keimbelastetem Wasser. Zudem besteht das Risiko einer Keimwanderung an den Innenwänden der Zuleitungsrohre.

Es besteht daher die Sorge, dass Keime auf diese Weise entgegen der Strömungsrichtung wandern. Die rückgewanderten Keime würden, sobald sie einen Abzweig des öffentlichen Trinkwassernetzes erreichen mit der Strömung an alle stromabwärts des Abzweigs angeschlossenen Verbraucher verteilt. Um dieses zu verhindern sind in Betrieben von denen eine entsprechende Gefahr eines Rückwanderns ausgeht sogenannte Systemtrennanlagen vorgeschrieben (vgl. DIN1988/EN1717). Solche Systemtrennanlagen haben einen Vorratsbehälter mit einer im Bodenbereich angeordneten Entnahmestelle. Entnommenes Wasser wird über einen freien Einlauf in den Vorratsbehälter nachgefüllt, so dass Keime nicht aus dem Vorratsbehälter in den Zulauf einwandern können. Wenn der Vorratsbehälter offen ist, d.h. mit der Umgebungsluft kommuniziert, hat das den Nachteil, dass eine zusätzliche Pumpe zwischen der Entnahmestelle des Vorratsbehälters und der Abgabestelle, d.h. einem Wasserhahn oder dgl. angeordnet werden muss. Zudem besteht auch die Gefahr einer Kontamination des Zulaufs über den Luftaustausch (z.B. durch Insekten, Staub etc.). Alternativ wurde vorgeschlagen den Vorratsbehälter als Druckbehälter auszuführen, d.h. der freie Auslauf mündet in einem Druckbehälter. Der Druckbehälter wird über den Zulauf unter Druck gesetzt, so dass auf die zusätzliche Pumpe verzichtet werden kann. Zudem ist die Gefahr einer Kontamination des Zulaufs durch Luftaustausch stark reduziert. Solche Systeme sind z.B. in der DE 197 16 989 A1, der DE 1708613, der DE 10 2014 113 671 und der DE 20 2007 004 345U1 beschrieben.

### Darstellung der Erfindung

Bei diesen Systemen entstehen eine ganze Reihe von technischen Problemen, die zum einen die Zuverlässigkeit betreffen und zum anderen herrscht in den Druckbehältern nach dem Stand der Technik naturgemäß eine sehr hohe Luftfeuchte, so dass eine Keimausbreitung an der Wandung des Druckbehälter auch über die Luftblase im Kopfbereich nicht völlig ausgeschlossen werden kann. Zudem wird beobachtet, dass das Volumen der Luftblase im Betrieb abnimmt, so dass die Systemtrennung nur dann gegeben ist, wenn regelmäßig Luft in den Druckbehälter nachgefüllt wird. Dazu sind teure Luftnachfüllvorrichtungen vorzusehen.

Der Erfindung liegt die Aufgabe zugrunde, eine gegenüber dem Stand der Technik hinsichtlich der Zuverlässigkeit verbesserte Systemtrennanlage bereitzustellen.

Diese Aufgabe wird durch eine Systemtrennanlage nach Anspruch 1 gelöst. Vorteilhafte Ausgestaltungen der Erfindung sind in den Unteransprüchen angegeben.

Die Systemtrennanlage trennt daher zwei Fluidsysteme, z.B. ein Trinkwassernetz (d.h. System 1) von einem nachgeschalteten in der Regel lokalen Versorgungssystem (System 2) z.B. für ein Krankenhaus, ein Gehöft, einen Schlachthof, einen Löschwasserspeicher etc.. Solche Systemtrennungen sind nach DIN EN 1717 für den Anschluss von Betrieben der Gefährdungsklasse 5 (s. DIN EN 1717) vorzusehen.

Die Systemtrennanlage nach der Erfindung hat zumindest einen Behälter zur Flüssigkeitsaufnahme, d.h. zur Speicherung von Wasser. Der Behälter wird daher auch als Vorratsbehälter bezeichnet. Der Behälter hat wie üblich in seinem oberen Bereich einen Flüssigkeitszulauf (kurz ,Zulauf'), z.B. für Trinkwasser, und in seinem unteren Bereich einen Flüssigkeitsablauf (kurz: 'Ablauf') für die Weiterleitung der Flüssigkeit an einen Verbraucher, d.h. eine Abgabestelle. Im Betrieb befindet sich in dem Behälter eine Flüssigkeit, die in der Praxis meist Wasser ist und nachfolgend lediglich beispielhaft so bezeichnet wird. In dem Behälter ist ein Flüssigkeitsspiegel, der ein Gaspolster im Kopfbereich von einem Flüssigkeitsreservoir unterhalb des Gaspolsters trennt. Der Zulauf ist vorzugsweise oberhalb des Flüssigkeitsspiegels in dem Behälter angeordnet. Entsprechend können Keime aus der Flüssigkeit nicht ohne weiteres den Zulauf erreichen. Der Ablauf ist unterhalb des Flüssigkeitsspiegels.

Das Gaspolster steht unter dem Druck der Flüssigkeitszufuhr. Dadurch stellt sich im Behälterinnenraum der durch die Flüssigkeitszufuhr vorgegebene Druck ein (sofern keine Druckminderer oder dgl. vorgesehen sind). Im einfachsten Fall ist das Gaspolster ein Luftpolster. Durch den Druck in dem Behälter wird zur Weiterleitung der Flüssigkeit aus dem Behälter an den Verbraucher keine Pumpe benötigt. Dadurch sinkt einerseits der Energiebedarf der Systemtrennanlage, was insbesondere bei großen Viehställen, für die normalerweise Pumpen mit großer Leistung notwendig sind, vorteilhaft ist. Andererseits kann die Systemtrennanlage dadurch problemlos für Heißwasseranwendungen, z. B. in Schlachtereien, Molkereien oder Krankenhäusern verwendet werden, da keine für Heißwasser geeigneten Pumpen notwendig sind. Ferner ist diese Systemtrennanlage auch geeignet für andere Medien/Flüssigkeiten als Wasser, z. B. Milch, Bier, Wein, Saft, etc..

Vorzugsweise wird über zumindest einen Niveausensor der Behälterfüllstand, d.h. die Höhe des Flüssigkeitsspiegels in dem Behälter erfasst. Beispielsweise kann der Niveausensor einen vorgegebenen maximalen Behälterfüllstand erfassen. Dadurch kann sichergestellt werden, dass eine Volumenabnahme des Gaspolsters detektiert werden wird. Vorzugsweise automatisch wird dann das Volumen des Gaspolsters mittels einer optionalen Gaszuführanlage erhöht. Wie heute üblich können die Signale des Niveausensors von einer Steuerung erfasst werden. Die Steuerung aktiviert bei Überschreiten des maximalen Behälterfüllstands die Gaszuführanlage und/oder eine Anzeige welche das Erreichen des Füllstandes signalisiert.

Zumindest der vom Gaspolster eingenommene Raum im Kopfbereich des Behälters trennt den Zulauf von dem Ablauf. Erfindungsgemäß ist in diesem Bereich wenigstens ein Entkeimungsmittel angeordnet. Das Entkeimungsmittel verhindert zuverlässig, dass Keime in dem feuchten Milieu des Kopfraumes an der Innenwandung des Behälters in Richtung des Zulaufs wandern.

Das Entkeimungsmittel weist wenigstens eine UV-Lichtquelle auf. Die UV-Lichtquelle bestrahlt die Behälterwandung (d.h. die Innenseite der Behälterwandung) und den Zulauf mit UV-Licht. UV steht als gebräuchliche Abkürzung für "ultraviolett". Vorzugsweise ist die UV-Lichtquelle so ausgerichtet, dass sie zumindest oder ausschließlich einen oberhalb des Flüssigkeitsspiegels liegenden ringförmigen Streifen der Behälterwandung bestrahlt. Besonders bevorzugt umgibt der Streifen den Zulauf ringförmig. Dadurch werden Keime die den ringförmigen Streifen erreichen zuverlässig abgetötet. Zudem genügt es, einen relativ kleinen Bereich mit UV-Licht zu bestrahlen, um ein Eindringen vom Keimen in das den Zulauf versorgende Fluidnetz (d.h. das System 1) zu verhindern, die notwendige Strahlungsleistung wird folglich reduziert.

Durch eine Bestrahlung der Flüssigkeit und des unter dem Flüssigkeitsspiegel liegenden Bereichs kann der Behälter und das Fluidreservoir als solches zumindest weitgehend keimfrei gehalten werden.

Als UV-Licht ("ultraviolettes Licht") wird üblicherweise (und so auch hier) elektromagnetische Strahlung mit einer Wellenlänge λ bezeichnet, die unterhalb der menschlichen Wahrnehmung liegt aber oberhalb der Wellenlängen von Röntgenstrahlung. Typischerweise verwendet man den Begriff "ultraviolette Strahlung" oder "ultraviolettes Licht" bei Wellenlängen kleiner etwa 400nm und größer 1nm. Besonders bevorzugt kann u.a. UV-C Licht mit einer Wellenlänge zwischen 200nm und 300nm verwendet werden. Entsprechende Lichtquellen sind gut verfügbar und haben eine hohe Zuverlässigkeit. Eine regelmäßige intermittierende Bestrahlung der Behälterinnenwand, vorzugsweise auch unterhalb des Flüssigkeitsspiegels hat sich als ausreichend für eine zuverlässige Abtötung eventuell in den Behälter eingedrungener Keime gezeigt. Dementsprechend kann in dem Behälter wenigstens eine UV-Lichtquelle angeordnet sein, die zumindest zum Teil in die Flüssigkeit eintaucht.

Zusätzlich kann das Gaspolster einen keimtötenden Bestandteil (in einer höheren Konzentration als in natürlicher Luft), d.h. eine vorzugsweise gasförmige keimtötende Substanz aufweisen, z.B. ein Halogenid wie Chlor oder Brom. Solche keimtötenden Gase gehen zwar in wässrige Lösung und sind daher auch in dem Behälter entnommenen Wasser gelöst, sind aber innerhalb der zugelassenen Grenzen im Trinkwasser unproblematisch (und sind zum Teil explizit zur Trinkwasserentkeimung zugelassen). Zudem wird dadurch auch eine Entkeimung oder zumindest eine Keimreduktion der auslaufseitigen Leitungen erreicht. Das Risiko eines Einwanderns von Keimen in den Behälter wird daher reduziert.

Vorzugsweise ist in dem Bereich des Gaspolsters an der Behälterinnenwand und/oder im oder um den Bereich des Zulaufs die Innenseite der Wandung eine Beschichtung aus einem keimhemmenden oder vorzugsweise keimtötenden d.h. antimikrobiellen Material. Beispielsweise kann an der Behälterinnenwandung oder am oder im Zulauf wenigstens ein Ring mit einer antimikrobiellen Oberfläche, z.B. ein Kupfer- und/oder ein Silberring angebracht werden. Der antimikrobielle Ring teilt den Behälter in einen zulaufseitigen (in der Regel oberen) Teil und in einen ablaufseitigen (in der Regel unteren) Teil. Keime müssten daher auf dem Weg vom Ablauf zum Zulauf das ringförmig angeordnete Material überwandern, was aufgrund seiner antimikrobiellen Eigenschaft nicht möglich ist. Besonders bevorzugt hat der Ring eine Oberfläche mit photokatalytischer Selbstreinigung.

Als oberer Bereich oder oberer Teil des Behälters wird hierin allgemein eine Deckenwandung des Behälters, die eine zweite oder obere Stirnseite desselben bildet, und/oder ein Bereich einer Seitenwandung des Behälters verstanden, der sich von der Deckenwandung bevorzugt bis zur Hälfte, besonders bevorzugt bis zu einem Drittel und insbesondere bevorzugt bis zu einem Fünftel des Abstands der Deckenwandung und der Bodenwandung erstreckt. Der obere Bereich (und somit der obere Teil) ist der Bereich, der im Normalbetrieb oberhalb des Sollwertes des Flüssigkeitsspiegels liegt. Der untere Bereich (d.h. der untere Teil) bezeichnet entsprechend den sich nach unten an den oberen Bereich anschließenden Bereich, also den Bereich unterhalb des Sollwertes des Flüssigkeitsspiegels (im Normalbetrieb).

Beispielsweise kann der Ring eine Oberfläche aus einem Halbleiter, z.B. Titandioxid (TiO₂, besonders bevorzugt aus TiO₂-Nanoteilchen) aufweisen. Der Halbleiter kann z.B. als Beschichtung auf die Innenfläche des Behälters aufgebracht werden. Solche Halbleiter bilden bei der Bestrahlung mit Licht entsprechend kurzer Wellenlänge Elektron-Loch Paare aus (d.h. die Energie der Lichtquanten muss größer gleich der Bandlücke sein), die wie Radikale auf organische Substanzen wirken. Solche Halbeiter haben daher die Eigenschaft organische Substanzen zu zersetzen, wenn Sie mit ausreichend kurzwelligem Licht, z.B. UV-Licht bestrahlt werden. Im Vergleich zu einer Entkeimung nur mit einer UV-Lichtquelle kann die Strahlungsleistung, d.h. der Energieverbrauch deutlich reduziert werden. Insbesondere die Verwendung von TiO₂ als Halbleitermaterial ist besonders vorteilhaft, weil es weitgehend inert und in Wasser unlöslich ist. TiO₂ gilt als ungiftig, und von einem Eintrag geringer Mengen in das über den Ablauf entnommene Wasser stellt kein Gesundheitsrisiko dar.

Zusätzlich kann das Entkeimungsmittel eine auf dem Wasserspiegel des Behälters aufschwimmende antimikrobielle Flüssigkeit (kurz "Entkeimungsflüssigkeit") sein, also eine nicht wasserlösliche Flüssigkeit mit einer geringeren Dichte als Wasser. Diese Flüssigkeit wirkt wie eine Dichtung auf Keime, die von dem Wasser in Richtung Zulauf wandern. Durch die Benetzung der Behälterwand gibt es keine Möglichkeit für eine entsprechende Keimmigration. Nachströmendes Wasser kann einfach durch die Entkeimungsflüssigkeit hindurch wandern. Über Beruhigungsmittel kann ein Vermischen der Entkeimungsflüssigkeit mit dem Wasser in dem Behälter auf ein vertretbares Minimum reduziert werden.

Einen weiteren Beitrag dazu, dass keine Keime in den Behälter gelangen können kann dadurch geleistet werden, dass das Auffüllen des Gaspolsters auf ein Minimum reduziert werden kann, weil durch das Nachfüllen, z.B. von Luft, Keime in den Behälter eingeschleppt werden können, die dann über den Zulauf das Zuleitungsnetz befallen. Das Reduzieren des Nachfüllens ist aber möglich, wenn das Gas in dem Druckbehälter produziert wird oder aber den Behälter gar nicht erst verlässt. Eine Gasproduktion ist zwar mittels Elektrolyse möglich ohne dass dazu der Behälter geöffnet werden müsste, jedoch ist das bei der Elektrolyse von Wasser entstehende Gasgemisch hochexplosiv und wird daher als Knallgas bezeichnet. Wenn auch nur geringe Mengen mit dem Wasser über den Ablauf ausgeschleust werden kann das bei der Entnahme größerer Mengen, die z.B. in der Landwirtschaft benötigt werden, zu einem Problem werden. Auch eine Explosion in dem Behälter ist denkbar, da schon ein noch so geringer Zündfunke genügt.

Vorzugsweise hat der Behälter eine Vorrichtung zur Aufnahme kinetischer Energie des aus dem Zulauf über eine freie Strecke in den Behälter einströmenden Wassers. Beispielsweise kann auf dem Wasserspiegel in dem Behälter ein Schwimmer angeordnet sein, auf den aus dem Einlauf austretendes Wasser auftrifft. Von der Oberfläche des Schwimmers läuft das Wasser dann vergleichsweise langsam in das Flüssigkeitsreservoirs. Bei dem langsamen Ablaufen bilden sich nur sehr wenig Gasperlen in dem Flüssigkeitsreservoir. Entsprechend weniger Gas wird durch den Ablauf abgezogen. Auch die in der Flüssigkeit pro Zeiteinheit gelöste Gasmenge wird reduziert.

Vorzugsweise ist zwischen dem Flüssigkeitsspiegel und dem Ablauf wenigstens ein Beruhigungsmittel, z.B. eine Beruhigungsplatte angeordnet. Das Beruhigungsmittel reduziert eine Durchmischung der oberen Schichten mit den unteren Schichten (d.h. auslaufnahen Schichten) des Flüssigkeitsreservoirs. Dadurch tauchen Gasblasen die beim Eintauchen des zulaufenden Flüssigkeitsstrahls entstehen nicht so tief in das Flüssigkeitsreservoir ein. Entsprechend geringer ist das Risiko, dass sie über den Ablauf aus den Behälter verlassen. Zudem ist die Verweildauer der Gasblasen in der Flüssigkeit kürzer, d.h. es geht weniger Gas in Lösung.

Besonders sicher ist die Systemtrennung, wenn sie ein erstes Ventil hat, das den Zulauf schließt oder öffnet und wenn sie ein zweites Ventil hat, das den Ablauf schließt oder öffnet. Bevorzugt sind das erste und das zweite Ventil miteinander verbunden, so dass sie z.B. synchron öffnen und/oder schließen. Beispielsweise können die Ventile je einen Ventilkörper zum Verschließen eines Ventilsitzes aufweisen, wobei die beiden Ventilkörper über ein gemeinsames Betätigungsmittel (z.B. eine Stange) mit einem Schwimmkörper verbunden sind. In anderen Worten haben vorzugsweise der Zulauf und der Ablauf je einen Ventilsitz für jeweils einen Ventilkörper, wobei der Ventilkörper den Ventilsitz verschließt, wenn ein Schwimmkörper über eine vorgegebene Höhe steigt. Die beiden Ventilkörper können über ein Betätigungsmittel, z.B. eine Stange miteinander gekoppelt sein. Der Schwimmkörper kann an dem Betätigungsmittel befestigt sein.

Nur zur Vermeidung von Missverständnissen: Vorzugsweise ist folglich zwischen der den Zulauf speisenden Zuleitung und dem Zulauf wenigstens ein erstes Ventil und/oder zwischen dem Ablauf und der sich daran anschließenden Ablaufleitung wenigstens ein Rückschlagventil.

Vorzugsweise öffnet das zweite Ventil als Folge einer vorgegebenen Druckdifferrenz zwischen dem Reservoir und dem in Strömungsrichtung dem zweiten Ventil nachgeschalteten Teil der Systemtrennung. Das erste Ventil wird dann vorzugsweise vom zweiten Ventil geöffnet und schließt, wenn das Gaspolster einen Solldruck erreicht hat. Besonders bevorzugt sind sowohl das erste als auch das zweite Ventil als Rückschlagventile ausgeführt und/oder jeweils in Reihe mit einem solchen geschaltet, d.h. zwischen der Zuleitung zum Zulauf und dem Zulauf ist wenigstens ein Rückschlagventil und/oder zwischen dem Ablauf und der Ablaufleitung ist wenigstens ein Rückschlagventil.

Vorzugsweise hat der Behälter eine Entlüftungsvorrichtung, die beispielsweise zwischen dem Flüssigkeitszulauf und dem Flüssigkeitsablauf angeordnet sein kann. Mit der Entlüftungsvorrichtung kann ein Unterschreiten eines minimalen Behälterfüllstands (Bmin) verhindert werden. Die Entlüftungsvorrichtung hat wenigstens ein Entlüftungsventil, vorteilhafterweise zwei redundant ausgeführte Entlüftungsventile, insbesondere automatische Entlüftungsventile mit Schwimmern oder dergleichen. Die Entlüftungsventile können beispielsweise parallel geschaltet sein, so dass im Versagensfall eines der Ventile stets für das andere einsatzbereit ist. Wenn der Flüssigkeitsspiegel einen unteren Sollwert unterschreitet, kann das wenigstens eine Entlüftungsventil geöffnet werden, wobei der Zulauf geöffnet und der Ablauf vorzugsweise geschlossen ist. Folglich steigt der Füllstand in dem Behälter. Bei Erreichen eines Nachfüllsollfüllstands schließt das wenigstens eine Entlüftungsventil. Während der Entlüftung ist der Druck in dem Behälter zumindest in etwa konstant, weil über den Zulauf Flüssigkeit nachfließt. Dadurch wird ein übermäßiges Nachlaufen des Zulaufs nach Erreichen des Nachfüllsollfüllstandes vermieden. D.h. der Unterschied zwischen Nachfüllsollfüllstand und Sollfüllstand im Normalbetrieb ist vglw. gering, wodurch die Bauhöhe des Behälters reduziert werden kann.

Beispielsweise kann die Systemtrennanlage das Gaspolster durch eine Gaserzeugungsvorrichtung auf einem bestimmten Niveau halten. Beispielsweise kann die Gaserzeugungsvorrichtung ein Gaseinlassventil haben, das im Normalbetrieb gesperrt ist. Geöffnet verbindet das Gaseinlassventil den Innenraum des Behälters mit einem Gasreservoir, vorzugsweise unter Zwischenschaltung wenigstens eines Filters. Zudem hat die Gaserzeugungseinrichtung, die eigentliche Gaspolstererzeugungsvorrichtung heißen müsste, eine Ablassöffnung (kurz ,Ablass') zum Ablassen von Flüssigkeit aus dem Behälter. Der Ablass kann über ein Ablassventil geöffnet und wieder geschlossen werden. Zudem kann die Gaserzeugungseinrichtung eine Steuerung aufweisen, die dazu eingerichtet ist ein Zulaufabsperrventil zu schließen und ebenso ein Ablaufabsperrventil zu schließen. Anschließend werden (vorzugsweise zunächst) das Ablassventil und (etwas verzögert) das Gaseinlassventil geöffnet. Dabei fließt Flüssigkeit aus dem Behälter ab, deren Volumen durch Gas aus dem Gasreservoir ersetzt wird, d.h. die Ansaugöffnung des Gaseinlassventils sollte über dem Flüssigkeitsspiegel liegen. Nachdem eine vorbestimmte Menge ersetzt wurde, was z.B. über einen Flüssigkeitspegelsensor bestimmt werden kann, werden das Ablassventil und das Gaseinlassventil wieder geschlossen. Wenn nun das Zulaufabsperrventil geöffnet wird, komprimiert die zulaufende Flüssigkeit das Gaspolster. Sobald der Solldruck erreicht wurde, kann die Systemtrennung wieder in den Normalbetrieb schalten, in dem Zulauf und Ablauf bedarfsabhängig geöffnet oder geschlossen werden. Der Vorteil dieses Verfahrens besteht darin, dass auf einen teuren und wartungsanfälligen Kompressor (oder Druckluftflaschen) zum Nachfüllen von Druckluft (oder einem anderen unter Druck stehenden Gas) verzichtet werden kann. Der Nachteil besteht darin, dass der Behälter für eine kurze Zeitspanne nicht als Wasserreservoir zur Verfügung steht. Sofern eine kurzzeitige Unterbrechung der Wasserversorgung z.B. während der Nachtstunden nicht toleriert werden kann, kann z.B. ein zweiter parallel zum ersten angeordneter Behälter vorgesehen werden, der die Wasserversorgung während des Betriebs der Gaserzeugungsvorrichtung aufrechterhält.

Alternativ oder zusätzlich kann die Gaserzeugungsvorrichtung eine Druckerzeugungsvorrichtung aufweisen, z.B. einen Kompressor. Dieser ist bevorzugt über eine in den Behälterinnenraum einmündende Gaszufuhrvorrichtung an den Behälter angeschlossen. Besonders bevorzugt speist der Kompressor einen Vorlagebehälter, der als Druckluftspeicher dienen kann. Druckschwankungen des Gaspolsters/Hygienezone können damit durch Gaszufuhr in den Behälter aus dem Vorlagebehälter ausgeglichen werden, ohne dass eine weitere Gaszufuhr durch den Kompressor in den Vorlagebehälter erfolgen muss. Auf diese Weise wird die Anzahl der Ein- und Ausschaltvorgänge des Kompressors verringert, was die Lebensdauer des Kompressors erhöht und gleichzeitig den Energiebedarf der erfindungsgemäßen Systemtrennanlage weiter verringert. Natürlich kann das von einem Kompressor komprimierte Gas auch in Druckflaschen vorgehalten werden.

Das Gas kann z.B. Luft sein, wobei bei der Ansaugung der Luft vorzugsweise ein Filter verwendet wird, der Staub und Keime abscheidet. Zudem kann der Luft ein entkeimendes Gas zugesetzt werden (s.o.)

Alternativ oder zusätzlich zu der Druckerzeugungsvorrichtung kann das Gaspolster auch mittels gezielter Ausgasung von Wasser/Flüssigkeit aufrecht erhalten werden, ohne Zuführung von externen Gasen, z. B. durch eine oder mehrere der folgenden Möglichkeiten:
- Aufrühren oder Aufblubbern mit Rührwerk,
- gezieltes Einbringen von Feststoffen, die mit Wasser Gas erzeugen,
- Ausgasen des Wassers durch Elektrolyse durch Aufspalten in Wasserstoff und Sauerstoff (physikalische Zersetzung des Wassers).

Zum Aufrühren/Aufblubbern der sich im Behälter befindlichen Flüssigkeit kann als Gaserzeugungsvorrichtung vorteilhaft eine an den Behälterinnenraum gekoppelte Rührvorrichtung vorgesehen sein. Durch das Rühren wird in der Flüssigkeit gelöstes Gas wieder freigesetzt und dadurch der Druck in der Gas- oder Luftblase erhöht.

Alternativ oder zusätzlich zum gezielten Einbringen von gaserzeugenden Feststoffen oder Flüssigkeiten eine Zufuhrvorrichtung als Gaserzeugungsvorrichtung vorgesehen sein. Die Zufuhrvorrichtung ist zum Zuführen von gaserzeugenden Feststoffen oder Flüssigkeiten in den Behälterinnenraum geeignet und kann z.B. durch eine in den Behälterinnenraum einmündende Zufuhrleitung gebildet sein. Die Zufuhrvorrichtung ist vorzugsweise als Druckschleuse, z.B. als Zellradschleuse, ausbildet.

Der Behälter kann zum Beispiel eine rechteck- oder kreisförmige Querschnittsform aufweisen. Es kann vorgesehen sein, dass die Seitenwandung einen zwischen der Bodenwandung und der Deckenwandung konstanten Querschnitt des Behälters definiert. Alternativ kann vorgesehen sein, dass die Seitenwandung des Behälters zwischen der Bodenwandung und der Deckenwandung einen sich zumindest bereichsweise verjüngenden Querschnitt des Behälters definiert. Zum Beispiel kann der obere Bereich des Behälters als kegelförmiger Einlauf gestaltet sein. Dies hat den Vorteil, dass die Flüssigkeitsoberfläche im oberen Bereich des Behälters verringert ist, wodurch die Flüssigkeit weniger Gas aufnehmen kann. Somit wird einerseits der Gasverbrauch der Druckerzeugungsvorrichtung verringert und andererseits der Sauerstoffverarmung vorgebeugt. Besonders bevorzugt verjüngt sich die Querschnittsfläche des Behälters oberhalb des Flüssigkeitsspiegels (Sollflüssigkeitsspiegel im Normalbetrieb).

Weiterhin kann bevorzugt vorgesehen sein, dass die Gaszufuhrvorrichtung ein geregeltes Absperrventil, insbesondere ein Magnetventil oder pneumatisches Ventil, zum Steuern der Gaszufuhr in den Behälterinnenraum aufweist. Auf diese Weise kann eine einfache Regelung der Gaszufuhr erfolgen, ohne den Betrieb des Kompressors, falls dieser vorgesehen ist, zu verändern.

Vorteilhaft kann es auch sein, dass die Systemtrennanlage mehrere, bevorzugt zwei, Niveausensoren aufweist. Diese können als Berührsonden, Schwimmer, Ultraschallsensoren oder dergleichen ausgeführt sein. Durch das Vorsehen mehrerer Niveausensoren kann der Ausfall einer Niveausonde nicht dazu führen, dass der Flüssigkeitsspiegel in dem Behälter unkontrolliert steigt. Eine zusätzliche Sicherheit kann dadurch eingeführt werden, dass die Sonden unterschiedliche Messprinzipien verwenden, also z. B. eine Sonde als Schwimmer, eine weitere Sonde als Berührsonde ausgeführt ist.

Zur weiteren Erhöhung der Sicherheit kann an dem Flüssigkeitsablauf ein Rückschlagventil derart angeschlossen sein, dass dieses ausschließlich eine Strömungsrichtung der Flüssigkeit aus dem Behälterinnenraum heraus zulässt. Auf diese Weise wird verhindert, dass verunreinigte Flüssigkeit von dem Verbraucher, z. B. einer Viehtränke, in den Behälter zurückströmt.

Bevorzugt kann auch an dem Flüssigkeitszulauf ein Rückschlagventil vorgesehen sein, dass derart angeschlossen ist, dass dieses ausschließlich eine Strömungsrichtung der Flüssigkeit in den Behälterinnenraum hinein zulässt. Mit anderen Worten verhindert ein zulaufseitiges Rückschlagventil also das Rückströmen von Flüssigkeit aus dem Behälter in den Zulauf und somit das System 1, d.h. gegebenenfalls in das Trinkwassersystem.

Besonders vorteilhaft kann an dem Flüssigkeitszulauf ein Druckminderer insbesondere in Form eines Drosselventils vorgesehen sein. Bevorzugt ist der Druckminderer regelbar ausgeführt. Mittels des Druckminderers ist der Druck in dem Flüssigkeitszulauf, der, wie oben beschrieben, den Druck im Behälterinnenraum definiert, an die verbraucherseitigen Bedürfnisse anpassbar. Bevorzugt ist der Druckminderer in Bezug auf eine Strömungsrichtung in den Behälterinnenraum hinein stromaufwärts des Rückschlagventils gelegen.

Es sollte vorzugsweise an dem Flüssigkeitszulauf ein regelbares Absperrventil angeschlossen sein. Dieses kann insbesondere in Form eines stromlos geschlossenen Magnetventils oder pneumatischen Ventils realisiert sein. Dies hat den Vorteil, dass bei einem Stromausfall das Absperrventil automatisch schließt, sodass ein eventueller Ausfall der Niveausonden nicht dazu führen kann, dass der Flüssigkeitsspiegel in dem Behälter unkontrolliert ansteigt und der Mindestabstand zwischen dem Flüssigkeitsspiegel und dem Flüssigkeitszulauf unterschritten wird. Bevorzugt ist das Absperrventil in Bezug auf eine Strömungsrichtung in den Behälterinnenraum hinein bevorzugt stromaufwärts des Rückschlagventils gelegen. Falls ein Druckminderer an den Flüssigkeitszulauf angeschlossen ist, kann das Absperrventil z. B. zwischen dem Druckminderer und dem Rückschlagventil gelegen sein. Dies hat den Vorteil, dass das regelbare Absperrventil für niedrigere Drücke ausgelegt werden kann. Das oben beschriebene Absperrventil ist im Sonderfall Feuerlöschleitungen vorzugsweise im stromlosen Fall auf Durchfluss zu wählen (,stromlos offen'), weil Feuerlöscheinrichtungen im stromlosen Fall einsatzfähig sein müssen. Daraus resultiert ein erhöhter Regelungs- und Warnaufwand für die Kontrolle des keimfreien Gaspolsters/Hygienezone. Das bedeutet, sollte die UV-Sonde ausfallen oder das Gaspolster/Hygienezone zu klein werden, muss eine Warnfunktion aktiviert werden, z.B. kann eine Warneinrichtung ertönen.

Insbesondere bevorzugt kann vorgesehen sein, dass der Behälter zum Ablassen von Gas oder Flüssigkeit aus dem Behälter, wenn in dem Behälterinnenraum ein Maximaldruck erreicht wird, ein Überdruckventil aufweist.

Besonders vorteilhaft kann eine unterhalb des Behälters angeordnete Sicherheitswanne vorgesehen sein. "Unterhalb" ist hierbei in Bezug auf die Schwerkraftrichtung zu verstehen. In dieser Sicherheitswanne kann aus dem Behälter, z.B. aufgrund von Undichtigkeiten austretende Flüssigkeit aufgefangen werden. Dadurch wird eine weitere Verbreitung von Keimen, z. B. durch Eintrag ins Grundwasser oder durch versehentliche Verbreitung durch Menschen, die mit austretender Flüssigkeit in Berührung kommen würden, wirkungsvoll verhindert. Bevorzugt kann der Sicherheitsbehälter einen Leckage-Sensor zum Abschalten der Systemtrennanlage aufweisen. Dieser kann insbesondere dazu vorgesehen sein, bei Flüssigkeitsaustritt aus dem Behälter in den Sicherheitsbehälter den Flüssigkeitszulaufs abzuriegeln.

Zur Energieversorgung der Systemtrennanlage kann eine Batterie Vorrichtungen mit zumindest einer Batterie vorgesehen sein. Auf diese Weise kann die Systemtrennanlage im Inselbetrieb genutzt werden. Dies ist insbesondere bei Krankenhäusern oder an abgeschiedenen Orten mit schwach ausgeprägter Infrastruktur vorteilhaft.

Die vorgenannten Ventile und Sensoren sind vorzugsweise an eine Steuerung angeschlossen, die die Ventile wie oben beschrieben als Funktion der mittels der Sensoren erfassten Größen ansteuert.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine erste Systemtrennanlage, und
Figur 2 zeigt eine weitere Systemtrennanlage.

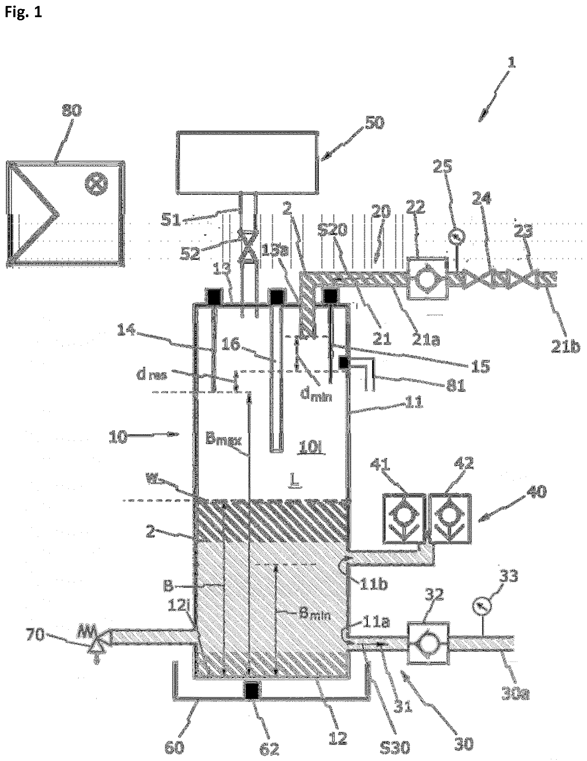

Figur 1 zeigt eine Systemtrennanlage 1 mit einem Behälter 10 zum Aufnehmen einer Flüssigkeit 2 (z.B. Wasser). Der Behälter 10 hat eine Seitenwandung 11, eine Bodenwandung 12 und eine Deckenwandung 13, die zusammen einen Behälterinnenraum 10i definieren. Die Bodenwandung 12 bildet eine erste Stirnseite des Behälters 10 und definiert ein in Bezug auf die Schwerkraftrichtung G unteres Ende des Behälters 10. Die Deckenwandung 13 bildet eine zweite Stirnseite des Behälters 10 und definiert ein in Bezug auf die Schwerkraftrichtung G oberes Ende des Behälters 10.

Der Behälter 10 ist aus einem druckfesten Material gebildet. Bevorzugt handelt es sich dabei um ein hygienisch unbedenkliches Material, wie z. B. rostfreier Stahl ("Edelstahl") oder dergleichen.

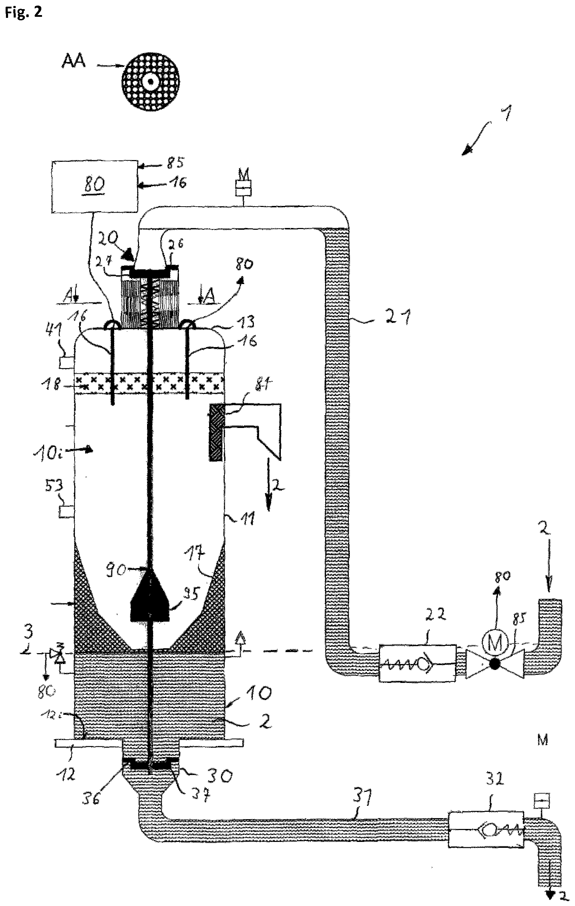

Die Systemtrennanlage 1 hat zudem einen Flüssigkeitszulauf 20 in den Behälter 10. Über den Flüssigkeitszulauf 20 wird dem Behälter 10 eine Flüssigkeit, z. B. Trinkwasser, zugeführt. Der Flüssigkeitszulauf 20 kann, wie in Figur 2 gezeigt, durch eine in den Behälterinnenraum 10i einmündende (Flüssigkeits-)Zufuhrleitung 21 gebildet sein, die durch eine Ausnehmung 13a der Deckenwandung 13 an den Behälter 10 angeschlossen ist. Auch kann die Zufuhrleitung 21 durch eine Ausnehmung der Seitenwandung 11, die in einem oberen Bereich der Seitenwandung 11 vorgesehen ist, an den Behälter 10 angeschlossen sein.

Generell ist der Flüssigkeitszulauf 20 in einem oberen Bereich des Behälters 10 an diesen angeschlossen.

Die Zufuhrleitung 21 des Flüssigkeitszulaufs 20 kann, wie in Figur 1 dargestellt, in den Behälterinnenraum 10i hineinragen oder bündig mit der Deckenwandung 13 oder der Seitenwandung 11 abschließen.

Im unteren Bereich des Behälters, d.h. unterhalb des Flüssigkeitsspiegels (vorzugsweise in Bodennähe), ist ein Flüssigkeitsablauf 30. Über den Flüssigkeitsablauf 30 wird sich in dem Behälter 10 befindliche Flüssigkeit 2 an eine Trinkwasser- oder Nutzwasseranlage oder dergleichen, also allgemein an einen Verbraucher abgegeben werden.

Der Flüssigkeitsablauf 30 kann, wie in Figur 1 gezeigt, durch eine Ablaufleitung 31 gebildet sein, die durch eine in dem unteren Bereich der Seitenwandung 11 vorgesehene Ausnehmung 11a der Seitenwandung 11 an den Behälter 10 angeschlossen ist. Auch kann die Zufuhrleitung 21 durch eine Ausnehmung der Bodenwandung 12 an den Behälter 10 angeschlossen sein. Generell ist der Flüssigkeitsablauf 30 in einem unteren Bereich des Behälters 10 (z.B. in der unteren Hälfte, vorzugsweise dem unteren Drittel, besonders bevorzugt in dem unteren Viertel, weiter bevorzugt in dem unteren Sechstel) an diesen angeschlossen.

Weiterhin weist die Systemtrennanlage 1 eine Entlüftungsvorrichtung 40 auf. Diese ist zwischen Flüssigkeitszulauf 20 und Flüssigkeitsablauf 30 an den Behälter 10 angeschlossen und stellt sicher, dass ein minimaler Behälterfüllstand Bmin nicht unterschritten wird.

Unter "Behälterfüllstand" wird hierin allgemein die Höhe des Flüssigkeitsspiegels W im Behälter, also der Abstand der Oberfläche der Flüssigkeit von einer dem Behälterinnenraum 10i zugewandten Innenfläche 12i der Bodenwandung 12 und insbesondere von einem in Bezug auf die Schwerkraftrichtung G tiefsten Punkt der Innenfläche 12i der Bodenwandung 12 verstanden.

Der minimale Behälterfüllstand Bmin richtet sich nach anlagenspezifischen Vorgaben. Beispielsweise kann vorgesehen sein, dass aufgrund des Flüssigkeitsbedarfs der an die Systemtrennanlage angeschlossenen Verbraucher, eine bestimmte Flüssigkeitsmenge - die einen bestimmten Behälterfüllstand verursacht - im Behälter nicht unterschritten werden darf, damit die Versorgung der Verbraucher sichergestellt ist.

Die Entlüftungsvorrichtung 40 kann, wie in Figur 1 gezeigt, über eine Anschlussvorrichtung an den Behälter 10 angeschlossen sein. Als Anschlussvorrichtung kann z. B. eine Rohrleitung vorgesehen sein, die an eine Ausnehmung 11b der Seitenwandung 11 des Behälters 10 angeschlossen ist. Die Entlüftungsvorrichtung 40 verhindert das Unterschreiten des minimalen Behälterfüllstand Bmin dadurch, dass ein Füllstandsgeber der Entlüftungsvorrichtung 40 den Behälterfüllstand B erfasst, und ein funktional an den Füllstandsgeber gekoppeltes Betätigungsventil bei Erreichen des minimalen Behälterfüllstands Bmin betätigt wird. In dem Flüssigkeitszulauf 20 herrscht ein Druck p_{zu}, der größer ist als der atmosphärische Umgebungsdruck außerhalb des Behälters 10. Wie in Figur 1 gezeigt, ist zwischen der im Behälter 10 befindlichen Flüssigkeit und dem oberen Behälterende ein Gaspolster als Hygienezone L vorhanden, das unter dem Druck p_{zu} des Flüssigkeitszulaufs 20 steht. Damit tritt bei Betätigung des Betätigungsventils der Entlüftungsvorrichtung eine Luftströmung aus dem Behälterinnenraum 10i heraus auf. Hierdurch sinkt der Druck im Behälterinnenraum 10i, was ein Nachströmen von Flüssigkeit durch den Flüssigkeitszulauf 20 bewirkt.

Bevorzugt kann die Entlüftungsvorrichtung 40 ein automatisches Entlüftungsventil mit wenigstens einem Schwimmer als Füllstandsgeber aufweisen. Besonders vorteilhaft sind zwei redundant ausgeführte Entlüftungsventile 41, 42 die Schwimmern oder dergleichen gesteuert, d.h. geöffnet und wieder geschlossen werden vorgesehen. Dies erhöht die Ausfallsicherheit des Systems.

Wie in Figur 1 gezeigt, weist die Systemtrennanlage 1 zumindest einen Niveausensor 14 auf, der den Behälterfüllstand B erfasst. Es kann vorgesehen sein, dass der Niveausensor 14 den Behälterfüllstand B allgemein erfasst. Somit kann beispielsweise der Niveausensor 14 auch als Füllstandsgeber für die Entlüftungsvorrichtung vorgesehen sein.

Bevorzugt ist vorgesehen, dass der Niveausensor 14 zumindest einen maximalen Behälterfüllstand Bmax erfasst. Der Behälterfüllstand Bmax ist durch einen minimal zulässigen Abstand dmin zwischen dem Flüssigkeitsspiegel und dem Flüssigkeitszulauf 20 definiert. Dieser minimale Abstand dmin ist so zu wählen, dass ein Übertreten von Bakterien, Keimen, Verunreinigungen und dergleichen, von dem sich in dem Behälter 10 befindlichen Medium/Flüssigkeit in den Wasserzulauf 20 ausgeschlossen ist. Bevorzugt beträgt dmin mehr als das Dreifache des Innendurchmessers der Zufuhrleitung 21 und besonders bevorzugt mehr als das Sechsfache des Innendurchmesser der Zufuhrleitung 21.

Wie in Figur 1 gezeigt, kann ein maximaler Behälterfüllstand Bmax mit einer Abstandsreserve dres zu dem minimalen Abstand dmin vorgesehen sein. Dadurch wird die Sicherheit des Systemtrennanlage 1 zusätzlich erhöht.

Zur Erhöhung der Sicherheit können auch mehrere Niveausensoren vorgesehen sein. Beispielsweise kann, wie in Figur 1 gezeigt, zumindest ein weiterer Niveausensor 15 in dem Behälterinnenraum 10i angeordnet sein. Dies hat den Vorteil, dass, falls der Niveausensor 14 durch eine Störung ausfällt, der weitere Niveausensor 15 den Behälterfüllstand B erfasst und im Falle des Erreichens des maximalen Behälterfüllstands Bmax den Flüssigkeitszulauf 20 abriegelt, sodass keine weitere Flüssigkeit in den Behälter 10 geleitet wird und der Behälterfüllstand B nicht mehr steigt. Auf diese Weise wird äußerst zuverlässig ein Unterschreiten des minimalen Abstands dmin verhindert.

Wie in Figur 1 gezeigt, kann die Systemtrennanlage 1 ein Notöffnungsventil 81 aufweisen. Das Notöffnungsventil 81 ist bevorzugt als Schwimmerventil ausgeführt, das einen Füllstandsgeber in Form eines Schwimmers und ein funktional an den Füllstandsgeber gekoppeltes Betätigungsventil aufweist. Der Füllstandsgeber des Notöffnungsventils 81 erfasst den Behälterfüllstand B. Bei Erreichen eines Behälterfüllstands B, bei dem der minimale Abstand dmin zwischen Flüssigkeitsspiegel W und dem Zulauf 20 erreicht wird, wird das Betätigungsventil des Notöffnungsventils 81 betätigt und lässt eine Flüssigkeitsströmung aus dem Behälterinnenraum 10i heraus zu. Dadurch bildet das Notöffnungsventil 81 einen (Not-)Ausgang des Behälters 10 zur Atmosphäre.

Sollte aus irgendwelchen Gründen die Regelung der Niveausensoren 14, 15 defekt sein, kann der Flüssigkeitsspiegel W durch das Notöffnungsventil 81 nicht soweit steigen, dass der minimale Abstand dmin unterschritten wird. Somit ist der Hygienebereich dreifach abgesichert und auch bei Stromausfall das Einschalten des minimalen Abstands dmin gewährleistet. Der Überlauf des Notöffnungsventils 81 kann in einer optional vorgesehenen Sicherheitswanne 60 enden.

Die Niveausensoren 14, 15 können als Berührsonden, Schwimmer, Ultraschallsonden oder dergleichen ausgeführt sein.

Wie bereits beschrieben, ist zwischen dem im Behälter 10 befindlichen Medium/Flüssigkeit und dem oberen Behälterende ein Gaspolster als Hygienezone L vorhanden, welches unter dem Druck p_{zu} derFlüssigkeitszufuhr 20 steht, der sich im Behälterinnenraum 10i einstellt. Das Gaspolster und somit auch die Hygienezone L erstrecken sich insbesondere zwischen der Flüssigkeitsoberfläche und der Deckenwandung 13 des Behälters 10. Zur Konstanthaltung des Drucks des Gaspolsters/Hygienezone L weist die Systemtrennanlage 1 eine Gaserzeugungsvorrichtung auf. Diese kann, wie in Figur 1 gezeigt, als Druckerzeugungsvorrichtung 50 ausgebildet sein. Alternativ oder zusätzlich kann als Gaserzeugungsvorrichtung eine oder mehrere der oben beschriebenen Alternativen vorgesehen sein (jeweils nicht gezeigt):
Die Druckerzeugungsvorrichtung 50 weist eine in den Behälterinnenraum 10i einmündende Gaszufuhrvorrichtung 51 auf. Die Druckerzeugungsvorrichtung 50 stellt sicher, dass das Gaspolster stets unter einem konstanten Druck steht, d.h. etwaige Gasverluste werden durch die Druckerzeugungsvorrichtung 50 ausgeglichen. Dadurch wird die Verarmung des Gaspolsters, die dazu führt, dass der Flüssigkeitsspiegel W steigt verhindert. Auf diese Weise ist ausgeschlossen, dass der minimale Abstand dmin zwischen Flüssigkeitsspiegel und Flüssigkeitszulauf 20 unkontrolliert unterschritten wird. Somit wird durch die erfindungsgemäße Systemtrennanlage Figur 1 ein Übertreten von Keimen von dem Medium/Flüssigkeit, das sich in dem Behälter 10 befindet, an das Medium/Flüssigkeit, das sich in der Flüssigkeitszufuhr 20 befindet mit äußerst hoher Zuverlässigkeit verhindert.

Aufgrund des über dem atmosphärischen Druck liegenden Drucks p_{zu} des Flüssigkeitszulaufs 20 kann die erfindungsgemäße Systemtrennanlage 1 ohne zusätzliche Pumpen auskommen, da die Flüssigkeit nicht entspannt und der Zulauf nicht mit der Atmosphäre kommuniziert. Dadurch ist die Systemtrennanlage (Figur 1) auch ohne weiteres für Heißwasseranwendungen, wie zum Beispiel in Molkereien, Schlachtereien oder Krankenhäusern geeignet, da keine hochpreisigen Heißwasserpumpen benötigt werden. Auch muss keine elektrische Energie für den Betrieb der Pumpen bereitgestellt werden. Die erfindungsgemäße der Systemtrennanlage 1 ist damit sehr energieeffizient.

Um den Druck in der Hygienezone L zumindest weitgehend konstant zu halten, kann vorgesehen sein, dass die Druckerzeugungsvorrichtung 50 dem Behälterinnenraum 10i ein Gas, z.B. Luft, über eine Gaszufuhrvorrichtung 51 zuführt.

Wie in Figur 1 dargestellt, kann in der Gaszufuhrvorrichtung 51 ein regelbares Absperrventil 52, z. B. in Form eines Magnetventils oder eines pneumatischen Ventils, vorgesehen sein, das die dem Behälter 10 zuzuführende Gasmenge regelt.

Als Druckerzeugungsvorrichtung 50 kann ein Kompressor oder andere Gaserzeugungsverfahren vorgesehen sein. Dieser kann direkt über die Gaszufuhrvorrichtung 50 an den Behälter 10 angeschlossen sein. Vorteilhafterweise kann der Kompressor auch einen Vorlagebehälter (nicht gezeigt) speisen, der über die Gaszufuhrvorrichtung 51 an den Behälter 10 angeschlossen ist. Dies hat den Vorteil, dass Druckschwankungen des Luftpolsters L innerhalb eines bestimmten Bereichs, insbesondere kleine Druckschwankungen, durch Gaszufuhr in den Behälter 10 aus dem Vorlagebehälter ausgeglichen werden können, ohne dass eine weitere Gaszufuhr durch den Kompressor in den Vorlagebehälter erfolgen muss.

Wie in Figur 1 weiter gezeigt, ist in dem Behälter 10 zumindest eine UV-Lichtquelle 16 angeordnet. Diese strahlt ultraviolette (UV) Strahlung aus, die zu einer Abtötung von eventuell in dem Behälterinnenraum 10i vorhandenen Keimen führt.

Zur Sicherstellung der Keimfreiheit des Behälterinnenraums 10i kann der Flüssigkeits-Ablauf 30 außerdem, wie in Figur 2 gezeigt, ein Rückschlagventil 32 aufweisen. Dieses ist derart angeschlossen an den Ablauf 30 angeschlossen, dass es ausschließlich eine Strömungsrichtung S30 der Flüssigkeit 2 aus dem Behälterinnenraum 10i heraus zulässt. Bei Auftreten einer Strömung in einem von dem Behälter 10 aus gesehen hinter dem Rückschlagventil 32 gelegenen Abschnitt 30a des Ablaufs 30, die eine zur Strömungsrichtung S30 entgegengesetzte Strömungsrichtung aufweist, sperrt das Rückschlagventil 32 den Ablauf 30 ab.

Dadurch kann kein Wasser von dem Abschnitt 30a in den Behälterinnenraum 10i zurückströmen. Dadurch wird ein Eintrag von durch den Verbraucher in das Wasser eingebrachten Keimen in das sich in dem Behälter 10 befindliche Wasser verhindert. Wasser ist nur beispielhaft für "Flüssigkeit" genannt.

Figur 1 zeigt weiterhin, dass an dem Ablauf 30 ein Manometer 33 zum Ablesen des Drucks im Ablauf 30 angeordnet sein kann.

Der kann Zulauf 20 ein Rückschlagventil 22 aufweisen, das derart an diesen angeschlossen ist, dass das Rückschlagventil 22 ausschließlich eine Strömungsrichtung S20 des Wassers in den Behälterinnenraum 10i hinein zulässt. Dadurch wird verhindert, dass Wasser aus einem Abschnitt 21a der Wasserzufuhrleitung 21, der von dem Behälter 10 aus gesehen vor dem Rückschlagventil 22 gelegen ist, in einen von dem Behälter 10 aus gesehen hinter dem Rückschlagventil 22 gelegenen Abschnitt 20b der Wasserzufuhrleitung 21zurückfließen kann. Auf diese Weise wird sichergestellt, dass auch bei Überschreiten des maximalen Behälterfüllstands Bmax keinerlei Wasser aus dem Behälterinnenraum 10i, das unter Umständen mit Keimen belastet ist, in den an eine Frischwasserversorgung angeschlossenen Abschnitt 20b des Wasserzulaufs 20 gelangen kann.

Die Systemtrennanlage 1 kann weiter einen Druckminderer 23 aufweisen, der an dem Wasserzulauf 20 angeschlossen ist, aufweisen. Der Druckminderer 23 kann als regelbares Drosselventil ausgeführt sein und ist in Bezug auf die Strömungsrichtung S20, die in den Behälterinnenraum 10i hinein gerichtet ist, bevorzugt stromaufwärts des Rückschlagventils 22 gelegen. Mit dem Druckminderer 23 kann der Druck p_{zu} des Wasserzulaufs auf die gewünschte Höhe eingestellt werden.

Weiterhin kann, wie in Figur 2 gezeigt, an dem Wasserzulauf 20 ein geregeltes Absperrventil 24, insbesondere in Form eines stromlos geschlossenen Magnetventils oder pneumatischen Ventils, vorgesehen sein. Im Fall einer Feuerlöscheinrichtung ist ein stromlos offenes Ventil zu verwenden. Das geregelte Absperrventil 24 ist in Bezug auf die Strömungsrichtung S20 bevorzugt stromaufwärts des Rückschlagventils 22 gelegen. Falls an dem Wasserzulauf 20 ein Druckminderer 23 vorgesehen ist, kann das geregelte Absperrventil 24 bevorzugt zwischen Druckminderer 23 und Rückschlagventil 22 angeordnet sein, wie in Figur 1 gezeigt.

Ähnlich wie beim Wasserablauf 30, kann auch an dem Wasserzulauf 20 ein Manometer 25 zum Ablesen des Drucks im Wasserzulauf 20 angeordnet sein kann.

Darüber hinaus kann der Behälter 10 ein Überdruckventil 70 (Sicherheitsventil pmax) zum Ablassen von Gas oder Medium/Flüssigkeit 2 aus dem Behälter 10 aufweisen. Bei dem in Figur 2 gezeigten Ausführungsbeispiel der Systemtrennanlage 1 ist das Überdruckventil 70 im unteren Bereich des Behälters 10 an diesen angeschlossen. Das Überdruckventil 70 kann selbstverständlich auch im oberen Bereich des Behälters 10 an diesen angeschlossen sein. Wenn in dem Behälterinnenraum 10i ein Maximaldruck erreicht wird, öffnet das Überdruckventil 70 und lässt eine Gas- oder Flüssigkeitsströmung aus dem Behälterinnenraum heraus zu, sodass der Druck im Behälterinnenraum 10i sinkt. Vorteilhafterweise ist an einem Ausgang des Überdruckventils 70 ein Auffangbehälter gelegen, in dem das Wasser aufgefangen wird, das beim Öffnen des Überdruckventils 70 gegebenenfalls aus dem Behälter 10 entweicht.

Wie in Figur 1 weiter gezeigt, kann unterhalb des Behälters 10, also in Bezug auf die Schwerkraftrichtung G unterhalb desselben, eine Sicherheitswanne 60 angeordnet sein. Falls an der Behälter undicht werden sollte, fängt die Sicherheitswanne 60 das austretende Medium/Flüssigkeit 2 auf. Dadurch wird verhindert, dass eventuell mit Keimen belastetes Medium/Flüssigkeit aus dem Behälterinnenraum 10i in die Umgebung gelangt. Dies ist insbesondere in Krankenhäusern vorteilhaft, da dort eine unkontrollierte Verbreitung von Keimen unter allen Umständen verhindert werden muss.

Bevorzugt kann die Sicherheitswanne 60 einen Leckage-Sensor 61 aufweisen, der erkennt, wenn sich in der Sicherheitswanne 60 Medium/Flüssigkeit ansammelt und daraufhin, z. B. bei Erreichen einer maximal zulässigen Flüssigkeitsmenge in der Sicherheitswanne, die Systemtrennanlage 1 abschaltet. Insbesondere kann vorgesehen sein, dass beim Abschalten der Systemtrennanlage 1 der Wasserzulaufs 20 in den Behälter 10 abgesperrt wird, z. B. durch Verriegeln des geregelten Absperrventils 24.

Die Systemtrennanlage 1 ist funktional mit einer Steuerungsvorrichtung 80 (kurz ,Steuerung 80') zum Steuern und Regeln des Betriebs der Systemtrennanlage verbindbar.

Figur 2 zeigt einen abgeschlossenen Behälter 10 einer Systemtrennungsanlage. Der Behälter 10 hat einen oben liegenden Zulauf 20, der über eine Flüssigkeitszufuhrleitung 21 (kurz ,Zuleitung' 21) mit einem ersten Fluidsystem, z.B. einem Trinkwassernetz verbunden ist (angedeutet durch Pfeil 2, der Flüssigkeitszufuhr symbolisiert). In der Zuleitung 21 ist ein elektrisch steuerbares Schaltventil 85 und ein Rückschlagventil 22, um den Zulauf 20 von dem ersten Fluidsystem zu trennen. Das Schaltventil ist mit einer Steuerung 80 verbunden. Zudem hat der Behälter 10 einen unten liegenden Ablauf 30 (Flüssigkeitsablauf 30) der über eine Ablaufleitung 31 ein zweites Wassersystem speist. In der Ablaufleitung 31 kann, wie auch in der Zulaufleitung 21 vorzugsweise ein Rückschlagventil 32 sowie ein vorzugsweise elektrisch steuerbares Schaltventil angeordnet sein.

Der Zulauf 20 und der Ablauf 30 haben jeweils einen Ventilsitz 26, 36, der durch je einen Ventilkörper 27, 37 geschlossen werden kann, so dass die Zulauf 20 und Ablauf 30 abgesperrt sind. Entsprechend haben die Ventilkörper eine Offenstellung in der sie die Ventilsitze 26, 36 freigeben und eine Geschlossenstellung in der die Ventilsitze 26, 36 verschlossen sind. Die beiden Ventilkörper 27, 37 sind durch ein Betätigungsmittel 90 (hier: Stange 90) miteinander verbunden, so dass immer beide Ventilkörper 27, 37 synchron zwischen ihrer Offen- und ihrer Geschlossenstellung verstellt werden. An dem Betätigungsmittel 90 ist ein Schwimmkörper befestigt, der bei ansteigenden Fluidspiegel in dem Behälter mittels des Betätigungsmittels 90 beide beiden Ventilkörper 27, 37 gegen ihre Ventilsitze 26, 36 drückt, so dass Zulauf 20 und Ablauf 30 geschlossen werden. Dadurch kann sicher verhindert werden, dass der Fluidspiegel, z.B. durch über den Ablauf rückströmendes Fluid über eine vorgegebene Höhe in dem Behälter 10 ansteigt. Eventuell mit Keimen kontaminierte Flüssigkeit kann daher den Zulauf und nicht erreichen. Vorzugsweise ist wenigstens einer der beiden Ventilkörper 27, 37 gegen den entsprechenden Ventilsitz vorgespannt. Dann öffnet das Ventil im Zulauf 20 und/oder das Ventil im Ablauf 30 nur bei einer entsprechenden Druckdifferenz und auch nur geringes Einströmen von potentiell verkeimter oder sonst wie verunreinigter Flüssigkeit in den Behälter 10 ist ebenso ausgeschlossen wie ein Einströmen von potentiell verkeimtem Gas oder einer Flüssigkeit in den Zulauf 20. Lediglich für den Fall, dass dennoch der Flüssigkeitsspiegel in dem Behälter über eine maximale Füllhöhe steigen sollte, hat der Behälter ein Notüberlaufventil 81, das vorzugsweise oberhalb des Schwimmkörpers 95 angeordnet sein sollte und einen Ablauf freigibt wenn der Flüssigkeitsspiegel die maximale Füllhöhe übersteigt, so dass der Abstand zwischen dem Flüssigkeitsspiegel und dem Zulauf unter einen vorgegebene Wert sinkt.

Der Behälter 10 hat eine Sollfüllhöhe, deren Flüssigkeitsspiegel 3 durch eine gestrichelte Linie angedeutet ist. Oberhalb der Sollfüllhöhe ist ein unter Druck stehendes Gaspolster. Der Zulauf steht daher nicht in unmittelbaren Kontakt der mit der Flüssigkeit 2 in dem Behälter 10.

Im oberen Bereich 10 des Behälters kann dieser einen Gasanschlussstutzen 53, aufweisen, der vorzugsweise mit einem Reservoir für ein keimtötendes Gas unter Zwischenschaltung wenigstens eines Schaltventils verbunden wird. Das Reservoir steht vorzugsweise unter Druck, so dass ggf. verbrauchtes keimtötendes Gas im laufenden Betrieb nachgefüllt werden kann.

Wird aus dem unteren Bereich des Behälters über den Ablauf 30 Flüssigkeit entnommen, so strömt eine entsprechende Menge über den Zulauf nach. Damit möglichst wenig von dem Gas in den Bereich des Ablaufs gerät und eventuell mit abgezogen wird, hat der Behälter vorzugsweise ein oberhalb des Flüssigkeitsspiegels und/oder in diesen eintauchend ein Beruhigungsmittel. Im gezeigten Beispiel ist das Beruhigungsmittel an der Behälterwandung befestigt und hat in der Mitte eine wannenförmige Vertiefung. Das Beruhigungsmittel nimmt die kinetische Energie der über den Zulauf nachströmenden Flüssigkeit auf. Es dringt daher in die Flüssigkeit 2 kein tief unter den Flüssigkeitsspiegel eintauchender Strahl ein, der Gasblasen in den Bereich des Ablaufs 30 mitreißen könnte. Im gezeigten Beispiel ist das Beruhigungsmittel porös, so dass oberhalb des Flüssigkeitsspiegels gesammeltes Wasser gleichmäßig und großflächig durch das Beruhigungsmittel hindurch Richtung Flüssigkeitsspiegel absinken kann. Alternativ und/oder zusätzlich kann die Flüssigkeit auch über den Rand des Beruhigungsmittels abfließen. In einer anderen Ausführungsform ist das Beruhigungsmittel ein Schwimmkörper.

Um auch ein Wandern entlang der Behälterwandung Richtung Zulauf 20 zu verhindern sind in Bereich der Gasblase hier als Stäbe angedeutete UV-Lampen angeordnet. Diese Bestrahlen die Behälterwandung und insbesondere einen ringförmigen Streifen 18 der Behälterwandung deren Oberfläche mit einem Keimhemmenden Material versehen ist oder daraus besteht. Besonders bevorzugt ist die keimhemmende Beschichtung eine Halbleiterbeschichtung, z.B. aus Titandioxid.

### Bezugszeichenliste

- 1: Systemtrennanlage
- 2: Medium/Flüssigkeit
- 3: Flüssigkeitsspiegel
- 10: Behälter
- 10i: Behälterinnenraum
- 11: Seitenwandung des Behälters
- 11a: Ausnehmung de Seitenwandung
- 12: Bodenwandung des Behälters
- 12i: Innenfläche der Bodenwandung
- 13: Deckenwandung des Behälters
- 13a: Ausnehmung der Deckenwandung
- 14, 15: Niveausensor
- 16: UV-Sonde
- 17: Beruhigungsmittel
- 18: ringförmiger Streifen
- 20: Flüssigkeitszulauf
- 21: Flüssigkeitszufuhrleitung
- 21a, 21b: Abschnitte der Flüssigkeitszufuhrleitung
- 22: Rückschlagventil
- 23: Druckminderer
- 24: geregeltes Absperrventil
- 25: Manometer
- 26: Ventilsitz
- 27: Ventilkörper
- 30: Flüssigkeitsablauf
- 30a: Abschnitt des Flüssigkeitsablaufs
- 31: Ablaufleitung
- 32: Rückschlagventil
- 33: Manometer
- 36: Ventilsitz
- 37: Ventilkörper
- 40: Entlüftungsvorrichtung
- 41, 42: Entlüftungsventile
- 50: Druckerzeugungsvorrichtung
- 51: Gasversorgungseinrichtung
- 52: geregeltes Absperrventil
- 53: Gasanschlussstutzen
- 60: Sicherheitswanne
- 61: Leckage-Sensor
- 70: Überdruckventil
- 80: Regelung /Steuerung
- 81: Notüberlaufventil
- 85: Schaltventil
- 90: Betätigungsmittel / Stange
- 95: Schwimmkörper

## Patentansprüche

1. Systemtrennanlage (1) mit zumindest
- einem Behälter (10) für eine Flüssigkeit (2), die in dem Behälter (10) einen vorbestimmten Flüssigkeitsspiegel (3) ausbildet, oberhalb dessen ein Gaspolster in dem Behälter (10) ist,
- einem Zulauf (20) im oberen Bereich des Behälters (10) zur Speisung des Behälters (10) aus einem ersten Fluidsystem,
- einen Ablauf (30) im unteren Bereich des Behälters (10) für die Weiterleitung der Flüssigkeit (2) an ein zweites Fluidsystem,
wobei der Behälter (10) druckdicht ist, so dass das Gaspolster oberhalb des Flüssigkeitsspiegels (3) unter dem Druck des Zulaufs (20) steht,
**dadurch gekennzeichnet, dass**
im Bereich des Gaspolsters wenigstens ein Entkeimungsmittel angeordnet ist und das Entkeimungsmittel wenigstens eine UV-Lichtquelle (16) zur Bestrahlung der Behälterwandung (11) und des Zulaufs (20) mit ultraviolettem Licht aufweist.

2. Systemtrennanlage nach Anspruch 1,
**dadurch gekennzeichnet, dass**
der Behälter (10) wenigstens einen Niveausensor (14, 15) zur Bestimmung der Höhe des Flüssigkeitsspiegels (3) aufweist.

3. Systemtrennanlage nach einem der Ansprüche 1 oder 2,
**dadurch gekennzeichnet, dass**
die UV-Lichtquelle (16) Mittel zur Bestrahlung eines ringförmigen Bereichs (18) der Innenwandung des Behälters (10) aufweist.

4. Systemtrennanlage nach Anspruch 3,
**dadurch gekennzeichnet, dass**
der ringförmige Bereich (18) den Zulauf (20) ringförmig einschließt.

5. Systemtrennanlage nach einem der Ansprüche 1 bis 4,
**dadurch gekennzeichnet, dass**
die UV-Lichtquelle (16) zumindest zum Teil unterhalb des vorgesehenen Flüssigkeitsspiegels (3) angeordnet ist, um ultraviolettes Licht in die Flüssigkeit (2) zu emittieren.

6. Systemtrennanlage nach einem der Ansprüche 1 bis 5,
**dadurch gekennzeichnet, dass**
das Gaspolster einen keimtötenden Bestandteil in einer höheren Konzentration als in Luft aufweist.

7. Systemtrennanlage nach einem der Ansprüche 1 bis 6,
**dadurch gekennzeichnet, dass**
der Behälter (10) eine Wandung (11) hat und dass an der Innenseite der Wandung (11) und/oder im oder um den Bereich des Zulaufs (20) die Innenseite der Wandung (11) eine Beschichtung aus einem keimhemmenden oder vorzugsweise keimtötenden Material aufweist oder daraus besteht.

8. Systemtrennanlage nach einem der Ansprüche 1 bis 7,
**dadurch gekennzeichnet dass**,
- der Behälter (10) eine Wandung (11) mit einer Innenseite hat,
- wobei auf einem ringförmigen Bereich der Innenseite ein Halbleiter angeordnet ist,
- in dem Behälter (10) wenigstens eine Lichtquelle zur Bestrahlung des Halbleiters angeordnet ist,
- die Bandlücke des Halbleiters kleiner ist als die Energie der Lichtquanten der Lichtquelle.

9. Systemtrennanlage nach Anspruch 8,
**dadurch gekennzeichnet, dass**
der Halbleiter Titanoxid (TiO₂) aufweist.

10. Systemtrennanlage nach einem der Ansprüche 1 bis 9
**dadurch gekennzeichnet, dass**
das Entkeimungsmittel eine nicht wasserlösliche keimtötende, flüssige Substanz aufweist, die eine geringere Dichte als Wasser hat.

11. Systemtrennanlage nach einem der Ansprüche 1 bis 10
**dadurch gekennzeichnet, dass**
das in dem Behälter (10) zwischen dem Zulauf (20) und dem Ablauf (30) ein Beruhigungsmittel (17) ist, dass eine unmittelbare Strömung vom Zulauf (20) zum Ablauf (30) abbremst.

12. Systemtrennanlage nach einem der Ansprüche 1 bis 11
**dadurch gekennzeichnet, dass**
der Zulauf (20) und der Ablauf (30) je einen Ventilsitz (26, 36) aufweisen, der von je einem beweglich zwischen einer Offenstellung und einer Geschlossenstellung gelagerten Ventilkörper (27, 37) durch Bewegen von der Offenstellung in die Geschlossenstellung geschlossen werden kann, wobei die beiden Ventilkörper (27, 37) über ein Betätigungsmittel (90) mit wenigstens einem Schwimmkörper (95) gekoppelt sind, so dass beide Ventilkörper (27, 37) ihren jeweiligen Ventilsitz (26, 36) verschließen, wenn der Schwimmkörper (95) über eine vorgegebene Höhe steigt.

13. Systemtrennanlage nach Anspruch 12,
**dadurch gekennzeichnet, dass**
wenigstens einer der beiden Ventilkörper (27, 37) in Richtung seiner Geschlossenstellung vorgespannt ist.

14. Systemtrennanlage nach einem der Ansprüche 1 bis 13
**dadurch gekennzeichnet, dass**
der Behälter (10) eine Entlüftungsvorrichtung (40) aufweist.

15. Systemtrennanlage nach einem der Ansprüche 1 bis 14
**dadurch gekennzeichnet, dass**
- sie Mittel zur automatischen Bestimmung des Abstandes des Flüssigkeitsspiegels (3) von dem Zulauf (20) hat,
- eine Gaserzeugungseinrichtung (51) zum Einleiten von Gas in den Behälter (10), und
- eine Steuerung (80), welche die Gaserzeugungseinrichtung (51) aktiviert, wenn der von den Mitteln bestimmte Abstand einen Sollwert unterschreitet.

## Claims

1. System separation device (1) comprising at least
- a tank (10) for a liquid (2) that builds a predetermined liquid level (3) in the tank (10), wherein above said liquid level (3), there is a gas cushion in the tank (10),
- an inlet (20) in a upper region of the tank (10) for feeding the tank (10) from a first fluid system,
- an outlet (30) in a lower region of the tank (10) for forwarding the liquid (2) to a second fluid system,
wherein the tank (10) is pressure-proof, such that the gas cushion above the liquid level (3) is under the pressure of the inlet (20),
**characterized in that**
at least one germicide is arranged in the region of the gas cushion and the germicide comprises at least one UV light source (16) for irradiating the tank wall (11) and the inlet (20) with ultraviolet light.

2. System separation device according to claim 1,
**characterized in that**
the tank (10) comprises at least one level sensor (14, 15) for determining the height of the liquid level (3).

3. System separation device according to one of claims 1 or 2,
**characterized in that**
the UV light source (16) comprises means for irradiating an annular region (18) of the inner wall of the tank (10).

4. System separation device according to claim 3,
**characterized in that**
the annular region (18) surrounds the inlet (20) annularly.

5. System separation device according to one of claims 1 to 4,
**characterized in that**
the UV light source (16) is disposed at least partially below the intended liquid level (3), to emit ultraviolet light into the liquid (2).

6. System separation device according to one of claims 1 to 5,
**characterized in that**
the gas cushion comprises a germicidal component in a higher concentration than the concentration in the air.

7. System separation device according to one of claims 1 to 6,
**characterized in that**
the tank (10) has a wall (11) and that at the inner side of the wall (11) and/or in or around the region of the inlet (20), the inner side of the wall (11) comprises a coating made of a germ-inhibiting or germicidal material or consists thereof.

8. System separation device according to one of claims 1 to 7,
**characterized in that**
- the tank (10) has a wall (11) with an inner side,
- wherein a semiconductor is arranged at an annular region of the inner side,
- at least one light source for irradiating the semiconductor is arranged in the tank (10),
- the band gap of the semiconductor is smaller than the energy of the light photons of the light source.

9. System separation device according to claim 8,
**characterized in that**
the semiconductor comprises titanium oxide (TiO₂).

10. System separation device according to one of claims 1 to 9,
**characterized in that**
the germicide comprises a non-watersoluble germicidal fluid substance, that has a lower density than the density of water.

11. System separation device according to one of claims 1 to 10,
**characterized in that**
a calming means (17) is arranged in the tank (10) between the inlet (20) and the outlet (30), wherein the calming means decelerates a flow velocity of a direct flow from the inlet (20) to the outlet (30).

12. System separation device according to one of claims 1 to 11,
**characterized in that**
the inlet (20) and the outlet (30) each comprise a valve seat (26, 36), wherein said valve seat can each be closed by a respective valve body (27, 37), wherein the valve body is movably mounted between an open-position and a closed-position by moving from the open-position to the closed-position, wherein both valve bodies (27, 37) are coupled with at least one float body (95) via an actuation means (90), such that both valve bodies (27, 37) close its respective valve seat (26, 36) when the float body (95) mounts above a predetermined level.

13. System separation device according to claim 12,
**characterized in that**
at least one of the both valve bodies (27, 37) is biased in the direction of its closed-position.

14. System separation device according to one of claims 1 to 13,
**characterized in that**
the tank (10) comprises a ventilation device (40).

15. System separation device according to one of claims 1 to 14,
**characterized in that** it comprises
- means for automatic detection of the distance of the liquid level (3) from the inlet (20),
- a gas-generation device (51) for delivering gas into the tank (10), and
- a control unit (80) for activating the gas-generation device (51) when the distance detected by the means falls below a nominal value.

## Revendications

1. Installation de séparation de systèmes (1) comprenant au moins
- un récipient (10) pour un liquide (2) qui forme dans le récipient (10) un niveau de liquide prédéterminé (3), au-dessus duquel un coussin de gaz se trouve dans le récipient (10),
- une entrée (20) dans la zone supérieure du récipient (10) pour alimenter le récipient (10) à partir d'un premier système de fluide,
- une sortie (30) dans la zone inférieure du récipient (10) pour transmettre le liquide (2) à un deuxième système de fluide,
dans laquelle le récipient (10) est étanche à la pression, de sorte que le coussin de gaz au-dessus du niveau de liquide (3) est soumis à la pression de l'entrée (20), **caractérisée en ce**
**qu'**au moins un moyen de désinfection est disposé dans la zone du coussin de gaz et le moyen de désinfection présente au moins une source de lumière UV (16) pour irradier la paroi de récipient (11) et l'entrée (20) avec une lumière ultraviolette.

2. Installation de séparation de systèmes selon la revendication 1,
**caractérisée en ce que**
le récipient (10) présente au moins un capteur de niveau (14, 15) pour déterminer la hauteur du niveau de liquide (3).

3. Installation de séparation de systèmes selon l'une des revendications 1 ou 2,
**caractérisée en ce que**
la source de lumière UV (16) présente des moyens pour irradier une zone annulaire (18) de la paroi intérieure du récipient (10).

4. Installation de séparation de systèmes selon la revendication 3,
**caractérisée en ce que**
la zone annulaire (18) entoure l'entrée (20) en forme d'anneau.

5. Installation de séparation de systèmes selon l'une des revendications 1 à 4,
**caractérisée en ce que**
la source de lumière UV (16) est disposée au moins en partie en dessous du niveau de liquide prévu (3) afin d'émettre une lumière ultraviolette dans le liquide (2).

6. Installation de séparation de systèmes selon l'une des revendications 1 à 5,
**caractérisée en ce que**
le coussin de gaz présente un constituant germicide à une concentration plus élevée que dans l'air.

7. Installation de séparation de systèmes selon l'une des revendications 1 à 6,
**caractérisée en ce que**
le récipient (10) possède une paroi (11) et que sur le côté intérieur de la paroi (11) et/ou dans ou autour de la zone de l'entrée (20) le côté intérieur de la paroi (11) présente ou est constitué d'un revêtement dans un matériau qui inhibe les germes ou de préférence tue les germes.

8. Installation de séparation de systèmes selon l'une des revendications 1 à 7,
**caractérisée en ce que**
- le récipient (10) possède une paroi (11) avec un côté intérieur,
- dans laquelle un semi-conducteur est disposé sur une zone annulaire du côté intérieur,
- au moins une source de lumière pour irradier le semi-conducteur est disposée dans le récipient (10),
- la bande interdite du semi-conducteur est inférieure à l'énergie des photons de la source de lumière.

9. Installation de séparation de systèmes selon la revendication 8,
**caractérisée en ce que**
le semi-conducteur présente de l'oxyde de titane (TiO₂).

10. Installation de séparation de systèmes selon l'une des revendications 1 à 9,
**caractérisée en ce que**
le moyen de désinfection présente une substance liquide germicide non soluble dans l'eau qui a une densité inférieure à celle de l'eau.

11. Installation de séparation de systèmes selon l'une des revendications 1 à 10,
**caractérisée en ce**
**qu'**un moyen de tranquillisation (17) qui ralentit un écoulement direct de l'entrée (20) vers la sortie (30) est présent dans le récipient (10) entre l'entrée (20) et la sortie (30).

12. Installation de séparation de systèmes selon l'une des revendications 1 à 11,
**caractérisée en ce que**
l'entrée (20) et la sortie (30) présentent chacune un siège de soupape (26, 36) qui peut être fermé par un corps de soupape respectif (27, 37) monté mobile entre une position ouverte et une position fermée par déplacement de la position ouverte dans la position fermée, les deux corps de soupape (27, 37) étant couplés par l'intermédiaire d'un moyen d'actionnement (90) à au moins un corps flottant (95) de telle sorte que les deux corps de soupape (27, 37) ferment leur siège de soupape respectif (26, 36) lorsque le corps flottant (95) monte au-dessus d'une hauteur prédéfinie.

13. Installation de séparation de systèmes selon la revendication 12,
**caractérisée en ce**
**qu'**au moins l'un des deux corps de soupape (27, 37) est précontraint dans le sens de sa position fermée.

14. Installation de séparation de systèmes selon l'une des revendications 1 à 13,
**caractérisée en ce que**
le récipient (10) présente un dispositif de ventilation (40).

15. Installation de séparation de systèmes selon l'une des revendications 1 à 14, **caractérisée en ce qu'**elle comporte
- des moyens pour déterminer automatiquement la distance entre le niveau de liquide (3) et l'entrée (20),
- un dispositif de génération de gaz (51) pour introduire du gaz dans le récipient (10) et
- un dispositif de commande (80) qui active le dispositif de génération de gaz (51) lorsque la distance déterminée par les moyens baisse en dessous d'une valeur de consigne.
